# EUROPEAN PATENT SPECIFICATION

(11) **EP 4 418 618 B1**
(45) Date of publication and mention of the grant of the patent: **29.01.2025**
(21) Application number: 23157577.0
(22) Date of filing: 20.02.2023
(51) Int. Cl.: H04L 41/5061, H04L 41/00, H04L 9/40, H04L 101/659, H04L 61/5014

(54) **METHOD FOR OPERATING A CUSTOMER PREMISES EQUIPMENT WITH A BROADBAND ACCESS NETWORK**
VERFAHREN ZUM BETREIBEN EINES KUNDENENDGERÄTES MIT BREITBAND-GATEWAY
PROCÉDÉ PERMETTANT DE FAIRE FONCTIONNER UN ÉQUIPEMENT DE LOCAUX CLIENT AVEC UN RÉSEAU D'ACCÈS À LARGE BANDE

(43) Date of publication of application: 21.08.2024
(73) Proprietor: Deutsche Telekom AG, 53113 Bonn (DE)
(72) Inventor: HAAG, Thomas, 63110 Rodgau (DE); MEYER, Klaus, 53173 Bonn (DE)
(74) Representative: Schwöbel, Thilo K.

(56) References cited:
- EP-B1- 3 322 147
- WO-A1-2011/160813
- US-A1- 2022 141 176

## Description

### BACKGROUND

The present invention relates a method for operating a customer premises equipment with a broadband access network of a telecommunications network, wherein the broadband access network comprises at least one access node, wherein a specific access node of the broadband access network is enabled to operatively connect the customer premises equipment to the telecommunications network in view of providing communication services and/or communication access services to a user related or connected to the customer premises equipment, wherein the broadband access network comprises a service edge entity or functionality and a policy controller entity or functionality as well as a business support system entity or functionality.

Furthermore, the present invention relates to a system comprising a customer premises equipment and a broadband access network for operating the customer premises equipment with the broadband access network, wherein the broadband access network comprises at least one access node, wherein a specific access node of the broadband access network is enabled to operatively connect the customer premises equipment to a telecommunications network in view of providing communication services and/or communication access services to a user related or connected to the customer premises equipment, wherein the broadband access network comprises a service edge entity or functionality and a policy controller entity or functionality as well as a business support system entity or functionality.

Furthermore, the present invention relates to a program and to a computer-readable medium for operating a customer premises equipment with a broadband access network of a telecommunications network.

The demand for packetized information exchange in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known telecommunications networks, providing a customer or subscriber with operational communication services typically requires a contractual relationship between such customer or subscriber and a network operator or service provider, i.e. especially being provided with fixed line connectivity implies such a contractual relationship to be established first and before the customer receives such connectivity.

Typically, in conventionally known telecommunications networks, the customer receives a username and password or is provided with a line ID information (especially in case a broadband network gateway platform, BNG platform, is used) assigned to the connection. Such pieces of information are then transmitted to the broadband network gateway or other controlling instance (e.g. PFS), especially via PADI (IA) or DHCP discovery in TLV2.

Customers can therefore only begin to be provided with communication services, or put their connection into operation, after conclusion of the contract and reception of the network key from the network operator or service provider for identification. This assignment of the network key and the connection to the customer is also called federation.

Typically regarding conventionally known telecommunications networks, such conclusion of a contract and reception of pieces of information in order to identify the user or customer or in order to be able to actually put a specific subscription into operation requires an in person contact or operation, e.g. at a point of sale, or presupposes an existing contractual relationship between the same customer or user and the respective network operator or service provider, e.g. relating to a contract relating to the provision of mobile communication services.

Such a requirement of an in person visit, e.g. to a point of sale or other authorized instance, or the requirement of another, already existing contractual relationship with a considered customer, either unnecessarily delays to actually put a specific considered subscription into operation, or it unnecessarily restricts the number of possible customers or clients regarding such communication services.

In the general context of providing network access to customer premises equipments, US 2022/0141176 A1 describes device identification based on a device identifier, device authentication, and subsequent allocation of an IP address to the device. Furthermore, EP 3 322 147 B1 describes an identification process based on a line ID and WO 2011/160813 A1 describes a method in which a network access related ID such as a line ID is used to activate IP connectivity towards a walled garden environment, and where full access to the network is unlocked after the access related ID is federated with contract information.

### SUMMARY

An object of the present invention is to provide a technically simple, effective and cost effective solution for operating a customer premises equipment with a broadband access network of a telecommunications network, wherein an access node of the broadband access network is enabled to operatively connect the customer premises equipment to the telecommunications network in view of providing communication services and/or communication access services to a user related or connected to the customer premises equipment in case that the user and/or customer premises equipment is unknown to the telecommunications network or has previously not been connected to the telecommunications network. A further object of the present invention is to provide a corresponding system comprising a customer premises equipment and a broadband access network, and a corresponding program or computer-readable medium.

The object of the present invention is achieved by a method according to claim 1.

It is thereby advantageously possible according to the present invention to realize an architecture of the broadband access network such that a fully automatic and customer-triggered possibility to bring the operational network connectivity into service, especially by means of using a customer identifier information or a personal and/or commercial identifier information, and without requiring an in person visit to a point of sale or other physical instance, and furthermore without the requirement of a video ident procedure. Hence, it is advantageously possible to immediately use products and services, and especially to realize and operatively use network connectivity to the broadband access network.

According to the present invention, it is advantageously possible that a contractual relationship (in order to operatively use network connectivity and be provided with communication services) is able to be realized (or to be put into operation) in real time (and in a convenient and cost-effective manner, especially using in-band communication) and, especially, it is possible to operatively use such network connectivity using a client device that is especially locally connected to a customer premises equipment, and, especially, such a contractual relationship is able to be realized or concluded by means of only using the customer premises equipment or the customer premises equipment together with the client device, especially based on using personal and/or commercial unique identifier information such as of a (national or regional) identity card or of a credit card.

According to the present invention, the aim is to be able to operatively use a customer premises equipment (and, especially and typically, to use client devices being locally connected (at least mainly locally connected, even if not exclusively), e.g. in a small office or home office or private setting) in view of communication services provided to that customer premises equipment (and the associated client devices) using the broadband access network of the telecommunications network. According to the present invention, it is advantageously possible to achieve this aim without the effort of an in person visit to a physical location or point of sale (and neither a video ident procedure) and without a pre-existing contractual relationship with the chosen network operator or service provider using the broadband access network for providing their communication services, and especially without the need to use a specific type of hardware device as customer premises equipment. According to the present invention, the broadband access network comprises at least one access node (but typically a plurality of such access nodes), and a specific access node (of such at least one or plurality of access nodes) is enabled to operatively connect the customer premises equipment to the telecommunications network in view of providing communication services and/or communication access services to a user (i.e. a client device) related or connected to the customer premises equipment. According to the present invention, the broadband access network additionally comprises a service edge entity or functionality and a policy controller entity or functionality as well as a business support system entity or functionality. Furthermore according to the present invention, instead of requiring an established or pre-existing contractual relationship in order to provide operatively usable network connectivity and in case that the customer premises equipment is unknown to the telecommunications network or has previously not been connected to the telecommunications network, the customer premises equipment transmits (in a first step) a request to be connected to the broadband access network, via the specific access node, to the service edge entity or functionality and/or to the policy controller entity or functionality, thereby the specific access node also transmitting a line ID information related to the connection, or port, used by the customer premises equipment. In a second step, the customer premises equipment receives, from the service edge entity or functionality and/or from the policy controller entity or functionality the line ID information, and, in a third step, the customer premises equipment initiates a protected data transmission tunnel to the business support system entity or functionality, wherein the data transmission tunnel is specific to the customer premises equipment, and wherein the line ID information as well as an identifier information, especially a hardware identifier information, relating to the (hardware of the) customer premises equipment, is transmitted, using the data transmission tunnel, to the business support system entity or functionality.

According to the present invention, these are the prerequisites for a prospective customer or prospective client (or subscriber) of the broadband access network or the telecommunications network to be able to initiate an operatively usable network connectivity using the respective customer premises equipment, especially and preferably solely (or, at least predominantly) using in-band communication via the customer premises equipment. Especially, it is advantageously possible according to the present invention that conducting further required steps - in order to eventually operatively establish such connectivity, especially in a protected and secure manner - is possible to be performed based on or using the protected data transmission tunnel between the customer premises equipment and the business support system entity or functionality. Especially, such a protected data transmission tunnel is realized using data being unique to (or uniquely assigned to) the customer premises equipment (hardware), hence, by means of being specific to the customer premises equipment (hardware) used, providing an enhanced level of data security and/or confidentiality regarding the protected data transmission tunnel itself. Furthermore, by means of the protected data transmission tunnel between the customer premises equipment and the business support system entity or functionality, it is advantageously possible, according to the present invention - while conducting further steps in order to operatively provide network connectivity to the customer premises equipment and its connected client devices -, to also protect the transmission of additional identifier information, especially personal and/or commercial identity information and/or the line ID.

The situation of a customer premises equipment being unknown to the telecommunications network or having previously not been connected to the telecommunications network especially occurs in case of a new customer premises equipment device of a new prospective customer or user of the broadband access network. In this case, there is, obviously, no known association of a network port (or access node or port of such an access node) and such a user or customer, as such an association is typically based on, or relates to, an identifier information related to the hardware device of the customer premises equipment, e.g. the serial number or a MAC address of the customer premises equipment. Especially according to the present invention, a user plane communication channel is able to be established, carrying the protected data transmission tunnel, between the customer premises equipment and the business support system entity or functionality, especially used for conducting subsequent steps in order to operatively provide network connectivity to the customer premises equipment and its connected client devices.

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

According to an embodiment of the present invention, it is advantageously possible and preferred that the business support system entity or functionality comprises a legitimation gateway, wherein the protected data transmission tunnel is, in a first sub-step of the third step, initiated towards the legitimation gateway, wherein, in a second sub-step of the third step, the customer premises equipment transmits, using the protected data transmission tunnel, personal and/or commercial identity information as well as the line ID to the legitimation gateway.

It is thereby advantageously possible to easily and effectively implement the inventive method.

According to another embodiment of the present invention, it is furthermore advantageously possible and preferred that the customer premises equipment receives, prior to the second sub-step of the third step, the personal and/or commercial identity information using a data transmission interface, especially a near-field communication interface and/or a short-range communication interface, especially a Bluetooth interface, and/or a wireless local area network communication interface, wherein especially the personal and/or commercial identity information is received from an identity document device and/or a smartcard device and/or a mobile computing device or smart phone.

By means of such data transmission, it is advantageously possible, according to the present invention, to provide for a connectivity procedure based on in-band data transmission.

According to still another embodiment of the present invention, it is advantageously possible and preferred that, during the first and second steps, the customer premises equipment on the one hand, and the service edge entity or functionality and/or the policy controller entity or functionality on the other hand, communicate using at least one out of the following:
-- point-to-point-over ethernet-protocol, PPPoE, especially using a PPPoE active discovery initiation, PADI, message in the first step, and a PPPoE active discovery offer, PADO, message in the second step,
-- dynamic host configuration protocol, DHCP, especially using a DHCP discover message in the first step, and a DHCP offer message in the second step,
-- dynamic host configuration protocol, DHCPv6, especially using a DHCP router solicitation message, RS, in the first step, and a DHCP router advertisement, RA, in the second step.

It is thereby advantageously possible to easily and effectively implement the inventive method.

Furthermore, according to a preferred embodiment of the present invention, it is advantageously possible and preferred that, during the first and second steps, the customer premises equipment transmits the identifier information, relating to the customer premises equipment,
wherein especially the identifier information relating to the customer premises equipment corresponds to a hardware address of the customer premises equipment, especially a medium access control, MAC, address.

It is thereby advantageously possible to easily and effectively implement the inventive method.

According to another embodiment of the present invention, it is furthermore advantageously possible and preferred that, after the second step and prior to the third step, the customer premises equipment transmits a request, especially a DNS request, regarding the business support system entity or functionality and/or the legitimation gateway, and the customer premises equipment receives an information regarding the business support system entity or functionality and/or the legitimation gateway.

It is thereby advantageously possible to easily and effectively implement the inventive method.

According to still another embodiment of the present invention, it is advantageously possible and preferred that the customer premises equipment is connected to the specific access node using one or a plurality out of the following
-- a shared medium, especially a point-to-multipoint access mechanism and especially a passive optical network or a part thereof or a data over cable service interface specification coaxial, DOCSIS, cable network,
   wherein the customer premises equipment especially corresponds to an optical network terminal or an optical network unit, and wherein the specific access node especially corresponds to an optical line terminal,
-- a point-to-point medium, especially using a digital subscriber line access, DSL, especially using multi-service access node, MSAN elements.

It is thereby advantageously possible to easily and effectively implement the inventive method.

According to another embodiment of the present invention, it is furthermore advantageously possible and preferred that, especially during the second step, the service edge entity or functionality and/or the policy controller entity or functionality provides an internet protocol connection to the customer premises equipment in view of realizing or providing to the customer premises equipment a walled garden functionality, especially connectivity to a domain name system entity or functionality.

It is thereby advantageously possible to easily and effectively implement the inventive method.

Furthermore, the present invention relates to a system according to claim 9.

Additionally, the present invention relates to a program according to claim 10 and to a computer-readable medium according to claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with, exemplarily, a central office point of delivery, wherein customer premises equipments are connected to the broadband access network and wherein client devices are connected to the customer premises equipments.
Figure 2 schematically illustrates a communication diagram between a customer premises equipment as well as entities or functionalities of the broadband access network and/or the telecommunications network according to the present invention.
Figure 3 schematically illustrates another representation of the exchange of identifier information according to the present invention.
Figure 4 schematically illustrates a representation regarding a protected data transmission tunnel between the customer premises equipment and the broadband access network and/or an entity or functionality of the telecommunications network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

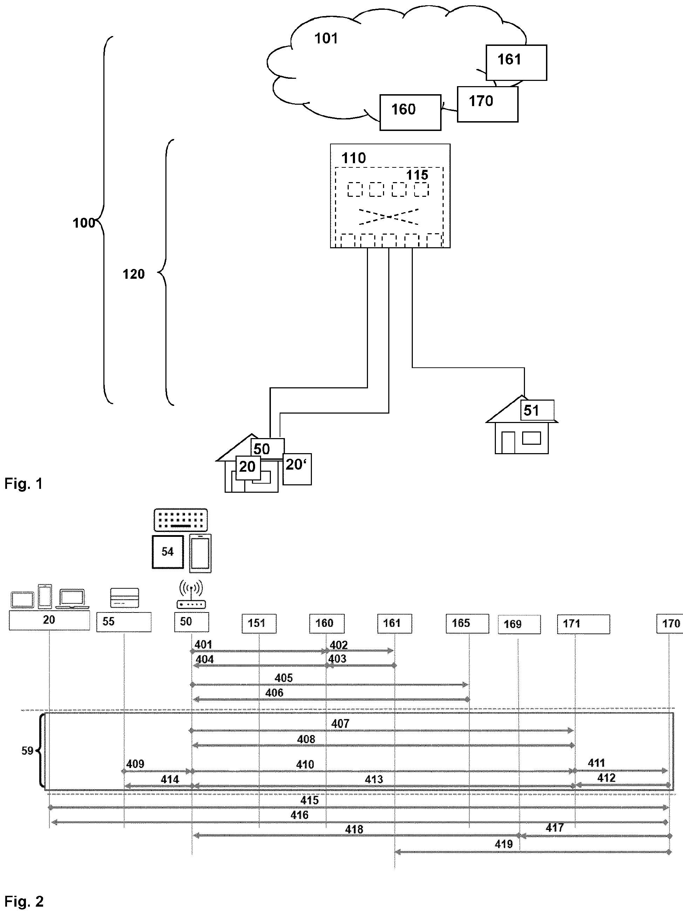

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 20, 20' are connected to the telecommunications network 100 by means of a (broadband) access network 120. The telecommunications network 100 preferably comprises (but not necessarily), especially as part of the broadband access network 120, at least one logical or physical central office point of delivery 110 that is preferably realized within a (mini) data center and that is especially handling different access requirements, especially different access possibilities, of the client devices 20, 20' to network functionalities provided by the telecommunications network 100 or via the telecommunications network 100. In addition, the telecommunications network 100 typically also comprises - besides the broadband access network 120 - a core network 101. The client devices 20, 20' are typically connected to the logical or physical central office point of delivery 110 by means of a customer premises equipment device 50 (e.g. located in a home or flat or building) or by means of a customer premises equipment entity or functionality that might be built into or realized by the client devices 20, 20'. Another customer premises equipment 51 (e.g. located in another home or flat or building) might be used for serving or connecting other client devices (not specifically represented in Figure 1). Preferably (but not necessarily), the central office point of delivery 110 comprises a switching fabric 115 comprising a plurality of spine network nodes and typically also a plurality of leaf network nodes which are not explicitly represented in Figure 1. The broadband access network 120 and/or the telecommunications network 100 furthermore comprises a business and/or operations support system 170 (or business support system 170). Furthermore, the broadband access network 120 and/or the telecommunications network 100 comprises a service edge entity or functionality 160 and a policy controller entity or functionality 161.

Figure 2 schematically illustrates a communication diagram between the customer premises equipment 50 as well as entities or functionalities of the broadband access network 120 and/or the telecommunications network 100 according to the present invention. These entities or functionalities of the broadband access network 120 and/or of the telecommunications network 100 include an access node (or, a specific access node) 151 to which the customer premises equipment 50 is connected to. Furthermore, these entities or functionalities of the broadband access network 120 and/or of the telecommunications network 100 include the service edge entity or functionality 160, the policy controller entity or functionality 161, a domain name system entity or functionality 165, an auto configuration server, ACS, 169, a legitimation gateway 171, and the business support system 170.

According to the present invention, different access technologies between the access nodes of the broadband access network 120 and customer premises equipments, especially between the specific access node 151 and the customer premises equipment 50, are possible - especially in order to provide network connectivity to different users or subscribers. E.g., the telecommunications network 100 might comprise an access node such as an optical line terminal (OLT), having a plurality of access (node) ports, wherein each one of these access ports is able to serve a plurality of customer premises equipments and the associated client devices. This means that a shared medium (or a shared communication means, e.g. a point-to-multipoint access mechanism and especially a passive optical network or a part thereof or a data over cable service interface specification coaxial, DOCSIS, cable network) is used between such a plurality of customer premises equipments, and the respective access node (or, rather, between these customer premises equipments, and the respective access node port of the access node). Furthermore, the telecommunications network 100 might additionally or alternatively comprises another access node, such as an MSAN, serving DSL customers. Likewise, such an MSAN access node typically comprises a plurality of access (node) ports. In contrast to the above mentioned access node using a shared medium, these access (node) ports are only able to serve one customer premises equipment (and the associated client devices). The mentioned access nodes are typically connected to a service edge (entity or functionality) 160 or broadband network gateway (entity or functionality), especially realized in or as part of a central office point of delivery 110, and the service edge (entity or functionality) 160 or broadband network gateway (entity or functionality) 160 is controlled by a policy server 161 or policy controller entity or functionality 161 (especially with an associated policy storage entity or functionality and/or an associated application programming interface, both not explicitly shown in Figures 1 and 2).

According to the present invention, the method relates to the operation of the customer premises equipment 50 (or a specific (one) customer premises equipment (of, typically, a plurality of customer premises equipments)) with the broadband access network 120 of the telecommunications network 100, the broadband access network 120 comprising typically a plurality of access nodes of the kind (or of another kind) of the specific access node 151; the specific access node 151 is enabled to operatively connect the (specific) customer premises equipment 50 to the telecommunications network 100 in view of providing communication services and/or communication access services to a user related or connected to the customer premises equipment 50 (i.e. especially a client device connected to that specific customer premises equipment 50). According to the present invention, the broadband access network 120 comprises a service edge entity or functionality 160 and a policy controller entity or functionality 161 as well as a business support system entity or functionality 170, wherein, in case that the customer premises equipment 50 is unknown to the telecommunications network 100 or has previously not been connected to the telecommunications network 100, the method comprises the steps of:
-- in a first step, the customer premises equipment 50 transmits a request to be connected to the broadband access network 120, via the specific access node 151, to the service edge entity or functionality 160 and/or to the policy controller entity or functionality 161, wherein thereby the specific access node 151 also transmits a line ID information related to the connection, or port, used by the customer premises equipment 50,
-- in a second step, the customer premises equipment 50 receives, from the service edge entity or functionality 160 and/or from the policy controller entity or functionality 161 the line ID information,
-- in a third step, the customer premises equipment 50 initiates a protected data transmission tunnel 59 to the business support system entity or functionality 170, wherein the data transmission tunnel 59 is specific to the customer premises equipment 50, and wherein the line ID information as well as an identifier information, relating to the customer premises equipment 50, is transmitted, using the data transmission tunnel 59, to the business support system entity or functionality 170. Especially, the identifier information relating to the customer premises equipment 50 corresponds to a hardware address of the customer premises equipment 50 (e.g. a serial number or another identifier), especially a medium access control, MAC, address.

According to the present invention, it is especially preferred that the business support system entity or functionality 170 comprises a legitimation gateway 171, wherein the protected data transmission tunnel 59 is, in a first sub-step of the third step, initiated towards the legitimation gateway 171, wherein, in a second sub-step of the third step, the customer premises equipment 50 transmits, using the protected data transmission tunnel 59, personal and/or commercial identity information as well as the line ID to the legitimation gateway 171. Such personal and/or commercial identity information might, e.g., comprise information or data as part of a national or regional identity card, or a credit card or another device comprising such personalized and/or protected data. In Figure 2, this is schematically and exemplarily shown by means of an identity (document) device 55 (e.g. a smartcard device or a that is able to be connected to (or to exchange data with) the customer premises equipment 50, especially via wireline or wireless data transmission interface of the customer premises equipment 50, especially a smartcard reader and/or a nearfield communication interface, NFC interface, indicated, in Figure 2, by means of reference sign 54.

These steps are schematically and exemplarily shown in Figure 2 by means of a plurality of processing steps illustrating the inventive method. In a first processing step 401, the customer premises equipment 50 - after initially being connected to the access node 151, and typically also after having established a user plane communication channel using the access node 151 - transmits a PADI/DHCP discover message to the service edge entity or functionality 160, and the access node 151 thereby injects the line ID information related to the connection. In a second processing step 402, the service edge entity or functionality 160 transmits a radius request (especially comprising the line ID information) to the policy controller entity or functionality 161. Hence, the first and second processing steps 401, 402 result in the customer premises equipment 50 transmitting a request (according to the first step of the inventive method) to be connected to the broadband access network 120, via the specific access node 151, to the service edge entity or functionality 160 and/or to the policy controller entity or functionality 161, wherein thereby the specific access node 151 also transmits the line ID information related to the connection, or port, used by the customer premises equipment 50. In a third processing step 403, the policy controller entity or functionality 161 transmits a default profile including a DNS information (domain name system information) and the line ID information to the service edge entity or functionality 160. In a fourth processing step 404, the service edge entity or functionality 160 transmits a PADO/DHCP offer message (via the access node 151) to the customer premises equipment 50. Hence, the third and fourth processing steps 403, 404 result in the customer premises equipment 50 receiving (according to the second step of the inventive method), from the service edge entity or functionality 160 and/or from the policy controller entity or functionality 161 the line ID information. Especially according to the present invention, during the first and second steps, the customer premises equipment 50 on the one hand, and the service edge entity or functionality 160 and/or the policy controller entity or functionality 161 on the other hand, communicate using at least one out of the following:
-- point-to-point-over ethernet-protocol, PPPoE, especially using a PPPoE active discovery initiation, PADI, message in the first step, and a PPPoE active discovery offer, PADO, message in the second step,
-- dynamic host configuration protocol, DHCP, especially using a DHCP discover message in the first step, and a DHCP offer message in the second step,
-- dynamic host configuration protocol, DHCPv6, especially using a DHCP router solicitation message, RS, in the first step, and a DHCP router advertisement, RA, in the second step.
Furthermore especially during the second step, the service edge entity or functionality 160 and/or the policy controller entity or functionality 161 provides an internet protocol connection to the customer premises equipment 50 in view of realizing or providing to the customer premises equipment 50 a walled garden functionality, especially a connectivity to a domain name system entity or functionality 165.
In a fifth processing step 405 and in a sixth processing step 406, the customer premises equipment 50 transmits a request to the domain name system entity or functionality 165 (especially using the DNS information received in the previous processing step) to provide a location information or an indication regarding the legitimation gateway 171, and the domain name system entity or functionality 165 provides such location information or indication regarding the legitimation gateway 171. In a seventh processing step 407, the customer premises equipment 50 transmits a tunnel establishment request (or a corresponding message) to the legitimation gateway 171 (especially using the location information or indication regarding the legitimation gateway 171 received in the previous processing step) - and/or, but not represented in Figure 2, to the business support system entity or functionality 170 - in order to establish a protected data transmission tunnel with the legitimation gateway 171 and/or with the business support system entity or functionality 170. In an eighth processing step 408, the customer premises equipment 50 receives, from the legitimation gateway 171 and/or from the business support system entity or functionality 170, a corresponding tunnel establishment acknowledgement (or a corresponding message) such that the protected data transmission tunnel is able to be established with the legitimation gateway 171 and/or with the business support system entity or functionality 170. Hence, the seventh and eighth processing steps 407, 408 result in the customer premises equipment 50 initiating (according to the third step of the inventive method) the protected data transmission tunnel 59 to the business support system entity or functionality 170; especially, the seventh and eighth processing steps 407, 408, correspond to the protected data transmission tunnel 59 being initiated, in the first sub-step of the third step, towards the legitimation gateway 171. It is to be understood that the seventh and eighth processing steps 407, 408 might comprise, respectively, more than one request or more than one message transmitted in each direction, in order for the protected data transmission tunnel 59 to be established. According to the present invention, the data transmission tunnel 59 is specific to the customer premises equipment 50, and the line ID information as well as an identifier information, relating to the customer premises equipment 50, is transmitted, using the data transmission tunnel 59, to the business support system entity or functionality 170 and/or to the legitimation gateway 171. Especially, according to the present invention, in the second sub-step of the third step, the customer premises equipment 50 transmits, using the protected data transmission tunnel 59, personal and/or commercial identity information as well as the line ID to the legitimation gateway 171. This is represented, in Figure 2, by means of a ninth processing step 409, a tenth processing step 410, an eleventh processing step 411, a twelfth processing step 412, a thirteenth processing step 413 and a fourteenth processing step 414, during which
-- the personal and/or commercial identity information as well as the line ID and the identifier information relating to the customer premises equipment 50 are transmitted to the legitimation gateway 171, and, after processing of such data, acknowledged (or a corresponding acknowledgment message sent) to the customer premises equipment 50 (and/or to the identity document device 55) - especially in the ninth, tenth, thirteenth, and fourteenth processing steps 409, 410, 413, 414 -, and
-- between the legitimation gateway 171 and the business support system entity or functionality 170 a client profile is generated or established - especially in the eleventh and twelfth processing steps 411, 422.
The contractual relation of the new customer (with the network operator of the telecommunications network or the service provider) is able to be finalized by means of a fifteenth processing step 415 and a sixteenth processing step 416, during which the customer choses from a service menu (especially regarding communication services) and finalizes the service configuration. In a seventeenth processing step 417, a service profile information (regarding the customer premises equipment 50 requesting the respective server) is transmitted, by the business support system entity or functionality 170, to the ACS 169, and, in an eighteenth processing step 418, the ACS 169 configures the customer premises equipment 50. In a nineteenth processing step 419, the business support system entity or functionality 170 triggers the policy controller entity or functionality 161 to replace the default profile for the service profile of the communication service chosen by the client or user of the customer premises equipment 50, thus resulting the customer premises equipment 50 (and the associated user equipments or client devices 20) being able to operatively using the network connectivity of the customer premises equipment 50 via the specific access node 151.

Especially according to the present invention, the customer premises equipment 50 receives, prior to the second sub-step of the third step, the personal and/or commercial identity information using the data transmission interface 54, especially a near-filed communication interface and/or a short-range communication interface, especially a Bluetooth interface, and/or a wireless local area network communication interface. The personal and/or commercial identity information is especially received from an identity document device 55 (or identity device 55) and/or a smartcard device 55 and/or a mobile computing device or smart phone.

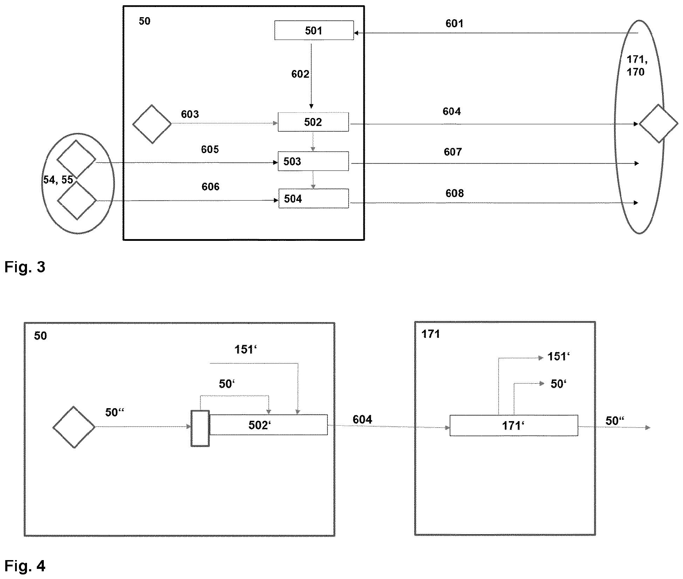

In Figure 3, another representation of the exchange of identifier information according to the present invention is schematically shown between the customer premises equipment 50 on the one hand, and the legitimation gateway 171 and/or the business support system entity or functionality 170 on the other hand. In a first processing step 601 the customer premises equipment 50 - especially a network ID module or entity or functionality 501 of the customer premises equipment 50 (i.e. the customer premises equipment 50 comprises such a network ID module or entity or functionality 501) - dials in to retrieve the line ID information (transmitted from the service edge entity or functionality 160 and/or from the policy controller entity or functionality 161 in the third and/or fourth processing steps 403, 404 shown in Figure 2, but initially originating from the access node 151, cf. the first processing step 401 shown in Figure 2). In a second processing step 602, the network ID module or entity or functionality 501 of the customer premises equipment 50 extracts the line ID information and provides the line ID information to a tunnel client module or entity or functionality 502 as part of the customer premises equipment 50 (i.e. the customer premises equipment 50 comprises such a tunnel client module or entity or functionality 502). In a third processing step 603, the tunnel client module or entity or functionality 502 retrieves (or receives) the hardware address of the customer premises equipment 50, i.e. the identifier information relating to the customer premises equipment 50, typically the MAC address or a serial number. In a fourth processing step 604, the tunnel client module or entity or functionality 502 sets up a CPE-specific tunnel towards the legitimation gateway 171 and/or the business support system entity or functionality 170, using the identifier information relating to the customer premises equipment 50. In a fifth and sixth processing steps 605, 606, the data transmission interface 54 (especially a reader external to the customer premises equipment 50, e.g. a user equipment, an application on such a user equipment or an NFC device) and/or the identity document device 55 provide personal identity information (cf. the fifth processing step 605) and/or commercial identity information (cf. the sixth processing step 606) to respective first CID (customer ID) client entity or functionality 503 of the customer premises equipment 50 and/or second CID (customer ID) client entity or functionality 504 of the customer premises equipment 50 (i.e. the customer premises equipment 50 comprises such a first CID client entity or functionality 503 and/or such a second CID client entity or functionality 504). In a seventh and eighth processing steps 607, 608, the first CID (customer ID) client entity or functionality 503 realizes network/customer federation (federating the line ID information with an information relating to the customer premises equipment 50 and/or the client or customer (Pers.ID) - seventh processing step 607), and the second CID (customer ID) client entity or functionality 504 realizes (or concludes) the contract between the client or customer (related to the customer premises equipment 50) and the telecommunications network or network operator (eighth processing step 608; this eighth processing step 608 especially being optional).

Figure 4 schematically illustrates a representation regarding the protected data transmission tunnel 59 - especially its establishment and how it is operated - between the customer premises equipment 50 and the broadband access network 120 and/or an entity or functionality of the telecommunications network 100, especially the legitimation gateway 171, wherein the specific exemplary illustration of Figure 4 relates to a considered transmission - using the protected data transmission tunnel 59 - in the direction from the customer premises equipment 50 towards the legitimation gateway 171. Especially in view of such a considered transmission (direction), the customer premises equipment 50 comprises, especially as part of the tunnel client module or entity or functionality 502, a payload scrambler 502', and the legitimation gateway 171 comprises a payload descrambler 171'. Especially as part of the fourth processing step 604 (represented in Figure 3), the protected data transmission tunnel 59 is established or set up and such a considered transmission occurs in the direction from the customer premises equipment 50 towards the legitimation gateway 171. Figure 4 exemplary shows, regarding such a situation, that the line ID information 151' (of the access node 151 used by the customer premises equipment 50) as well as the identifier information 50' relating to the customer premises equipment 50 is transmitted, by the customer premises equipment 50, and received by the legitimation gateway 171, in a protected manner (especially in an encrypted manner), i.e. the line ID information 151' and the identifier information 50' relating to the customer premises equipment 50 is not transmitted as plaintext (but as ciphertext, i.e. in encrypted manner), i.e. protected with regard to, e.g., a man-in-the-middle attack or an eavesdropping attempt. As represented in Figure 4, both the line ID information 151' as well as the identifier information 50' (relating to the customer premises equipment 50 - especially internally (of the customer premises equipment 50) detected or learned or retrieved, cf. the third processing step 603 represented in Figure 3)
-- are provided as part of the data to be transmitted by the protected data transmission tunnel 59 (or injected) on the transmitter (or transmitting) side (i.e., regarding the considered transmission, on the customer premises equipment 50 side), i.e. by the tunnel client module or entity or functionality 502 or its payload scrambler 502', and
-- received (or extracted) on the receiving side (i.e., regarding the considered transmission, on the legitimation gateway 171 side), i.e. by the payload descrambler 171'. Likewise, customer data - indicated, in Figure 4, by means of reference sign 50" - are transmitted by the protected data transmission tunnel 59 and according to the considered transmission direction.
Regarding the inverse direction, i.e. a transmission in the direction from the legitimation gateway 171 towards the customer premises equipment 50, a realization analogous to the representation of Figure 4 is preferably (but not necessarily) implemented according to the present invention. This means that - regarding such a transmission having an inverse direction - the customer premises equipment 50 comprises, likewise especially as part of the tunnel client module or entity or functionality 502, a payload descrambler, and the legitimation gateway 171 likewise comprises a payload scrambler (both not shown in Figure 4). Especially as part of the fourth processing step 604 (represented in Figure 3) or as part of subsequent processing steps, the protected data transmission tunnel 59 is established or set up and such transmission occurs in the direction from the legitimation gateway 171 towards the customer premises equipment 50.

According to the present invention, it is preferred that the customer premises equipment 50 receives, prior to the second sub-step of the third step, the personal and/or commercial identity information using the data transmission interface 54 and/or the identity document device 55. The identity document device 55 could, alternatively or cumulatively, also be a user equipment (such as, e.g., a smart phone) or a computing device (such as, e.g., a tablet or the like). This is possible, according to the present invention, with a reduced effort as, even today, typical fixed network customer premises equipments (CPEs, e.g. for DSL access, G-PON access and/or P2P fiber access) is usually already suitable for collecting this data and transmitting it during startup due to the technology used (i.e. the data transmission interface 54). Especially in case that the terminal device hardware address/modem ID/serial number (i.e. the identifier information 50' relating to the customer premises equipment 50) is also transmitted to the network, it is possible not only to realize federation (i.e. customer - connection federation) to be performed by (or in) the business support system entity or functionality 170, but the customer premises equipment 50 (or customer premises equipment device) can also be recognized and special features taken into account during automatic configuration - a prerequisite for such a functionality would be a default profile with an IP address and a comparatively low bandwidth. Alternatively to using the data transmission interface 54 of the customer premises equipment 50 (to transmit customer-related data and/or connection related data towards the telecommunications network 100), it is alternatively possible and preferred, according to the present invention, that, e.g., a smartphone application collects the necessary data (such as, e.g., customer ID, device ID (i.e. the identifier information 50' relating to the customer premises equipment 50), connection ID (i.e. the line ID information 50')) and transmits such data via a mobile communication network (i.e. out-of-band) to the policy controller entity or functionality 161 and/or business support system entity or functionality 170; such a solution would be required in case that - due to the (hardware) design of the actual customer premises equipment 50 used - no feedback or confirmation to the customer or of the customer can be made; however, it is preferred, according to the present invention, to use an in-band transmission of such data. Hence, typically according to the present invention, the necessary data are retrieved via (radio) near field technology, which is built (as the data transmission interface 54) into the fixed network customer premises equipment 50. The customer premises equipment 50 first establishes a default IP connection to the network to establish basic connectivity (first and second step or first to fourth processing steps 401 to 404 of Figure 2). Via a DNS call (fifth and sixth processing steps 405, 406 of Figure 2), the customer premises equipment 50 obtains the destination address of the business support system entity or functionality 170 system and/or the legitimization gateway 171 (and/or payment gateway) which provides the possibility to establish the protected data transmission tunnel 59 which may especially be encrypted (i.e. transports the transmitted data in encrypted manner).

The connection to the card reading function (i.e. especially using the data transmission interface 54 of the customer premises equipment 50, e.g. to a mobile application (of a user equipment or smart phone device also having such an analogous data transmission interface) or to an additional device (such as an identity document device 55) is then established (cf. processing steps 409 to 414 of Figure 2). The customers legitimize themselves by transferring their data read out from the ID card and/or their cash card (credit, ...). Based on the device ID (e.g. HW address of the terminal device, SN, ...), the ID card (ID card, cash card), all data for registration and, if necessary, also for concluding a contract are available. An initial plausibility check of the address determines whether the new customers are located (roughly) in the area of their (stated) place of residence, in which case activation takes place directly. If such check shows that the specified place of residence does not (roughly) match the area, activation takes place for a limited time, such that corresponding customers can connect to an agent for legitimation and thus put the connection into operation.

Especially according to the present invention, it is advantageously possible to use automatic connection identification (by means of transmitting the line ID information 151' to the customer premises equipment 50 and then again, using the protected data transmission tunnel 59 towards the business support system entity or functionality 170 and/or legitimation gateway 171) for automatic connection set up. However, such automatic connection identification is also generally applicable for hardware exchange of the customer premises equipment 50 and/or for relocation and/or for wholesale. Especially according to the present invention, the line ID information 151' is transmitted or transferred in (or as part of) the point-to-point-protocol connection to the customer premises equipment 50.
Hence, according to the present invention, the customer ID (e.g. by means of an ID card) is transmitted to the customer premises equipment 50, and from there transmitted (with the hardware ID) to the access node (with the line ID information), and from there to perform connection set up (contract conclusion or contract change / services). Line ID for downward compatibility with the previous network and for special cases (HW exchange, replacement circuits in network, relocation and wholesale) Registration can take place via first (fixed network) and second (mobile network) path (first path is innovation driver here).

According to the present invention, a specific set of data or a set of pieces of information is held in the customer premises equipment 50 (such a set of data or a set of pieces of information might relate to the connection (such as the line ID information), to customer data (such data identifying the user) and/or to the service profile / service profiles / applications), i.e. such a set of data or a set of pieces of information is held in a decentralized manner and not longer centered in the telecommunications network (e.g. on or at a repository such as the BNG/platform control) but managed by and agent (or module or component in the router, i.e. the customer premises equipment 50.

Hence, according to the present invention, between the customer premises equipment 50 and the access node 151 and/or the service edge entity or functionality 160, a point-to-point-protocol (dial-up) connection is established without authentication, a secured data transmission tunnel is set up between the customer premises equipment 50 and the legitimation gateway 171 (or legitimation server, OTT); legitimation of the customer is performed, e.g. by means of an ID card as well as optional account information provided.
Hence, the customer establishes a contractual relationship and configures network access: Customer gets basic connectivity and legitimizes itself and controls network/service property.

## Claims

1. Method for operating a customer premises equipment (50) with a broadband access network (120) of a telecommunications network (100), wherein the broadband access network (120) comprises at least one access node (151),
wherein a specific access node (151) of the broadband access network (120) is enabled to operatively connect the customer premises equipment (50) to the telecommunications network (100) in view of providing communication services and/or communication access services to a user related or connected to the customer premises equipment (50),
wherein the broadband access network (120) comprises a service edge entity or functionality (160) and a policy controller entity or functionality (161) as well as a business support system entity or functionality (170),
wherein, in case that the customer premises equipment (50) is unknown to the telecommunications network (100) or has previously not been connected to the telecommunications network (100), the method comprises the following steps:
-- in a first step, the customer premises equipment (50) transmits a request to be connected to the broadband access network (120), via the specific access node (151), to the service edge entity or functionality (160) and/or to the policy controller entity or functionality (161), wherein thereby the specific access node (151) also transmits a line ID information related to the connection, or port, used by the customer premises equipment (50),
-- in a second step, the customer premises equipment (50) receives, from the service edge entity or functionality (160) and/or from the policy controller entity or functionality (161) the line ID information,
-- in a third step, the customer premises equipment (50) initiates a protected data transmission tunnel (59) to the business support system entity or functionality (170), wherein the data transmission tunnel (59) is specific to the customer premises equipment (50), and wherein the line ID information as well as an identifier information, relating to the customer premises equipment (50), is transmitted, using the data transmission tunnel (59), to the business support system entity or functionality (170).

2. Method according to claim 1, wherein the business support system entity or functionality (170) comprises a legitimation gateway (171), wherein the protected data transmission tunnel (59) is, in a first sub-step of the third step, initiated towards the legitimation gateway (171), wherein, in a second sub-step of the third step, the customer premises equipment (50) transmits, using the protected data transmission tunnel (59), personal and/or commercial identity information as well as the line ID to the legitimation gateway (171).

3. Method according to one of the preceding claims, wherein the customer premises equipment (50) receives, prior to the second sub-step of the third step, the personal and/or commercial identity information using a data transmission interface, especially a near-field communication interface and/or a short-range communication interface, such as a Bluetooth interface and/or a wireless local area network communication interface,
wherein especially the personal and/or commercial identity information is received from an identity document device and/or a smartcard device (50) and/or a mobile computing device or smart phone.

4. Method according to one of the preceding claims, wherein, during the first and second steps, the customer premises equipment (50) on the one hand, and the service edge entity or functionality (160) and/or the policy controller entity or functionality (161) on the other hand, communicate using at least one out of the following:
-- point-to-point-over ethernet-protocol, PPPoE, especially using a PPPoE active discovery initiation, PADI, message in the first step, and a PPPoE active discovery offer, PADO, message in the second step,
-- dynamic host configuration protocol, DHCP, especially using a DHCP discover message in the first step, and a DHCP offer message in the second step,
-- dynamic host configuration protocol, DHCPv6, especially using a DHCP router solicitation message, RS, in the first step, and a DHCP router advertisement, RA, in the second step.

5. Method according to one of the preceding claims, wherein, during the first and second steps, the customer premises equipment (50) transmits the identifier information, relating to the customer premises equipment (50),
wherein especially the identifier information relating to the customer premises equipment (50) corresponds to a hardware address of the customer premises equipment (50), such as a medium access control, MAC, address.

6. Method according to one of the preceding claims, wherein, after the second step and prior to the third step, the customer premises equipment (50) transmits a request, especially a DNS request, regarding the business support system entity or functionality (170) and/or the legitimation gateway (171), and the customer premises equipment (50) receives an information regarding the business support system entity or functionality (170) and/or the legitimation gateway (171).

7. Method according to one of the preceding claims, wherein the customer premises equipment (50) is connected to the specific access node (151) using one or a plurality out of the following
-- a shared medium, especially a point-to-multipoint access mechanism, such as a passive optical network or a part thereof or a data over cable service interface specification coaxial, DOCSIS, cable network,
wherein, in the case of using the passive optical network or part thereof, the customer premises equipment (50) especially corresponds to an optical network terminal or an optical network unit, and the specific access node (151) especially corresponds to an optical line terminal,
-- a point-to-point medium, especially using a digital subscriber line access, DSL, and especially using multi-service access node, MSAN elements.

8. Method according to one of the preceding claims, wherein, especially during the second step, the service edge entity or functionality (160) and/or the policy controller entity or functionality (161) provides an internet protocol connection to the customer premises equipment (50) in view of realizing or providing to the customer premises equipment (50) a walled garden functionality, especially a connectivity to a domain name system entity or functionality (165).

9. System comprising a customer premises equipment (50) and a broadband access network (120) for operating the customer premises equipment (50) with the broadband access network (120), wherein the broadband access network (120) comprises at least one access node (151),
wherein a specific access node (151) of the broadband access network (120) is enabled to operatively connect the customer premises equipment (50) to a telecommunications network (100) in view of providing communication services and/or communication access services to a user related or connected to the customer premises equipment (50),
wherein the broadband access network (120) comprises a service edge entity or functionality (160) and a policy controller entity or functionality (161) as well as a business support system entity or functionality (170),
wherein, in case that the customer premises equipment (50) is unknown to the telecommunications network (100) or has previously not been connected to the telecommunications network (100), the system is configured such that:
-- the customer premises equipment (50) transmits a request to be connected to the broadband access network (120), via the specific access node (151), to the service edge entity or functionality (160) and/or to the policy controller entity or functionality (161), wherein thereby the specific access node (151) also transmits a line ID information related to the connection, or port, used by the customer premises equipment (50),
-- the customer premises equipment (50) receives, from the service edge entity or functionality (160) and/or from the policy controller entity or functionality (161) the line ID information,
-- the customer premises equipment (50) initiates a protected data transmission tunnel (59) to the business support system entity or functionality (170), wherein the data transmission tunnel (59) is specific to the customer premises equipment (50), and wherein the line ID information as well as an identifier information, relating to the customer premises equipment (50), is transmitted, using the data transmission tunnel (59), to the business support system entity or functionality (170).

10. Program comprising a computer readable program code which, when executed in part on a customer premises equipment (50), in part on a service edge entity or functionality (160) and/or a policy controller entity or functionality (161), and in part on a business support system entity or functionality (170), causes the customer premises equipment (50), the service edge entity or functionality (160) and/or the policy controller entity or functionality (161), and the business support system entity or functionality (170), to perform a method according to one of claims 1 to 8.

11. Computer-readable medium comprising instructions which when executed in part on a customer premises equipment (50), in part on a service edge entity or functionality (160) and/or a policy controller entity or functionality (161), and in part on a business support system entity or functionality (170), causes the customer premises equipment (50), the service edge entity or functionality (160) and/or the policy controller entity or functionality (161), and the business support system entity or functionality (170), to perform a method according to one of claims 1 to 8.

## Patentansprüche

1. Verfahren zum Betreiben eines Teilnehmerendgerätes (50) mit einem Breitbandzugangsnetz (120) eines Telekommunikationsnetzes (100), wobei das Breitbandzugangsnetz (120) mindestens einen Zugangsknoten (151) umfasst, wobei ein spezifischer Zugangsknoten (151) des Breitbandzugangsnetzes (120) in die Lage versetzt wird, das Teilnehmerendgerät (50) mit dem Telekommunikationsnetz (100) wirkzuverbinden, um Kommunikationsdienste und/oder Kommunikationszugangsdienste für einen Benutzer bereitzustellen, der zu dem Teilnehmerendgerät (50) in Beziehung steht oder mit dem Teilnehmerendgerät (50) verbunden ist,
wobei das Breitbandzugangsnetz (120) eine Service-Edge-Entität oder -Funktionalität (160) und eine Richtlinien-Controller-Entität oder -Funktionalität (161) sowie eine Business-Support-System-Entität oder -Funktionalität (170) umfasst,
wobei in dem Fall, dass das Teilnehmerendgerät (50) dem Telekommunikationsnetz (100) unbekannt ist oder zuvor nicht mit dem Telekommunikationsnetz (100) verbunden war, das Verfahren die folgenden Schritte umfasst:
- in einem ersten Schritt sendet das Teilnehmerendgerät (50) eine Anforderung, mit dem Breitbandzugangsnetz (120) verbunden zu werden, über den spezifischen Zugangsknoten (151) an die Service-Edge-Entität oder -Funktionalität (160) und/oder an die Richtlinien-Controller-Entität oder -Funktionalität (161), wobei dadurch der spezifische Zugangsknoten (151) auch eine Leitungskennungsinformation sendet, die sich auf die Verbindung oder den Port bezieht, die bzw. der durch das Teilnehmerendgerät (50) verwendet wird,
- in einem zweiten Schritt empfängt das Teilnehmerendgerät (50) von der Service-Edge-Entität oder -Funktionalität (160) und/oder von der Richtlinien-Controller-Entität oder -Funktionalität (161) die Leitungskennungsinformation,
- in einem dritten Schritt initiiert das Teilnehmerendgerät (50) einen geschützten Datenübertragungstunnel (59) zu der Business-Support-System-Entität oder -Funktionalität (170), wobei der Datenübertragungstunnel (59) für das Teilnehmerendgerät (50) spezifisch ist, und wobei die Leitungskennungsinformation sowie eine Identifiziererinformation, die sich auf das Teilnehmerendgerät (50) bezieht, unter Verwendung des Datenübertragungstunnels (59) zu der Business-Support-System-Entität oder -Funktionalität (170) übertragen werden.

2. Verfahren nach Anspruch 1, wobei die Business-Support-System-Entität oder -Funktionalität (170) ein Legitimations-Gateway (171) umfasst, wobei der geschützte Datenübertragungstunnel (59) in einem ersten Teilschritt des dritten Schrittes in Richtung des Legitimations-Gateways (171) initiiert wird, wobei in einem zweiten Teilschritt des dritten Schrittes das Teilnehmerendgerät (50) unter Verwendung des geschützten Datenübertragungstunnels (59) persönliche und/oder gewerbliche Identitätsinformationen sowie die Leitungskennung an den Legitimations-Gateway (171) sendet.

3. Verfahren nach einem der vorangehenden Ansprüche, wobei das Teilnehmerendgerät (50) vor dem zweiten Teilschritt des dritten Schrittes die persönlichen und/oder gewerblichen Identitätsinformationen unter Verwendung einer Datenübertragungsschnittstelle, insbesondere einer Nahfeldkommunikationsschnittstelle und/oder einer Kurzstreckenkommunikationsschnittstelle, wie zum Beispiel einer Bluetooth-Schnittstelle und/oder einer Wireless Local Area Network-Kommunikationsschnittstelle, empfängt,
wobei insbesondere die persönlichen und/oder gewerblichen Identitätsinformationen von einer Identitätsdokumentvorrichtung und/oder einer Smartcard-Vorrichtung (50) und/oder einer mobilen Computervorrichtung oder einem Smartphone empfangen werden.

4. Verfahren nach einem der vorangehenden Ansprüche, wobei während des ersten und des zweiten Schrittes das Teilnehmerendgerät (50) einerseits und die Service-Edge-Entität oder -Funktionalität (160) und/oder die Richtlinien-Controller-Entität oder -Funktionalität (161) andererseits unter Verwendung mindestens eines von Folgendem kommunizieren:
- Point-to-Point-over-Ethernet-Protokoll (PPPoE), insbesondere unter Verwendung einer PPPoE Active Discovery Initiation (PADI)-Nachricht in dem ersten Schritt und einer PPPoE Active Discovery Offer (PADO)-Nachricht in dem zweiten Schritt,
- Dynamic Host Configuration Protocol (DHCP), insbesondere unter Verwendung einer DHCP-Discover-Nachricht in dem ersten Schritt und einer DHCP-Offer-Nachricht in dem zweiten Schritt,
- Dynamic Host Configuration Protocol (DHCPv6), insbesondere unter Verwendung einer DHCP-Router-Solicitation-Nachricht (RS) in dem ersten Schritt und eines DHCP-Router-Advertisement (RA) in dem zweiten Schritt.

5. Verfahren nach einem der vorangehenden Ansprüche, wobei während des ersten und des zweiten Schrittes das Teilnehmerendgerät (50) die Identifiziererinformation, die sich auf das Teilnehmerendgerät (50) bezieht, sendet, wobei insbesondere die Identifiziererinformation, die sich auf das Teilnehmerendgerät (50) beziehen, einer Hardware-Adresse des Teilnehmerendgerätes (50), wie zum Beispiel einer Medium Access Control (MAC)-Adresse, entspricht.

6. Verfahren nach einem der vorangehenden Ansprüche, wobei, nach dem zweiten Schritt und vor dem dritten Schritt, das Teilnehmerendgerät (50) eine Anfrage, insbesondere eine DNS-Anfrage, bezüglich der Business-Support-System-Entität oder -Funktionalität (170) und/oder des Legitimations-Gateways (171) sendet, und das Teilnehmerendgerät (50) eine Information bezüglich der Business-Support-System-Entität oder -Funktionalität (170) und/oder des Legitimations-Gateways (171) empfängt.

7. Verfahren nach einem der vorangehenden Ansprüche, wobei das Teilnehmerendgerät (50) mit dem spezifischen Zugangsknoten (151) unter Verwendung eines oder mehrerer von Folgendem verbunden wird:
- ein gemeinsam genutztes Medium, insbesondere ein Punkt-zu-Mehrpunkt-Zugangsmechanismus, wie zum Beispiel ein passives optisches Netz oder ein Teil davon oder ein Data Over Cable Service Interface Specification (DOCSIS)-Koaxialkabelnetz, wobei im Fall der Verwendung des passiven optischen Netzes oder eines Teils davon das Teilnehmerendgerät (50) insbesondere einem optischen Netzendgerät oder einer optischen Netzeinheit entspricht und der spezifische Zugangsknoten (151) insbesondere einem optischen Leitungsendgerät entspricht,
- ein Punkt-zu-Punkt-Medium, insbesondere unter Verwendung eines Digital Subscriber Line (DSL)-Zugangsanschlusses und insbesondere unter Verwendung von Multi Service Access Node (MSAN)-Elementen.

8. Verfahren nach einem der vorangehenden Ansprüche, wobei, insbesondere während des zweiten Schrittes, die Service-Edge-Entität oder -Funktionalität (160) und/oder die Richtlinien-Controller-Entität oder -Funktionalität (161) eine Internetprotokoll-Verbindung zu dem Teilnehmerendgerät (50) bereitstellen, um eine Walled-Garden-Funktionalität, insbesondere eine Konnektivität zu einer Domänennamensystem-Entität oder -Funktionalität (165), zu realisieren oder für das Teilnehmerendgerät (50) bereitzustellen.

9. System, umfassend ein Teilnehmerendgerät (50) und ein Breitbandzugangsnetz (120), zum Betreiben des Teilnehmerendgerätes (50) mit dem Breitbandzugangsnetz (120), wobei das Breitbandzugangsnetz (120) mindestens einen Zugangsknoten (151) umfasst,
wobei ein spezifischer Zugangsknoten (151) des Breitbandzugangsnetzes (120) in die Lage versetzt wird, das Teilnehmerendgerät (50) mit einem Telekommunikationsnetz (100) wirkzuverbinden, um Kommunikationsdienste und/oder Kommunikationszugangsdienste für einen Benutzer bereitzustellen, der zu dem Teilnehmerendgerät (50) in Beziehung steht oder mit dem Teilnehmerendgerät (50) verbunden ist,
wobei das Breitbandzugangsnetz (120) eine Service-Edge-Entität oder -Funktionalität (160) und eine Richtlinien-Controller-Entität oder -Funktionalität (161) sowie eine Business-Support-System-Entität oder -Funktionalität (170) umfasst,
wobei in dem Fall, dass das Teilnehmerendgerät (50) dem Telekommunikationsnetz (100) unbekannt ist oder zuvor nicht mit dem Telekommunikationsnetz (100) verbunden war, das System so konfiguriert ist, dass:
- das Teilnehmerendgerät (50) eine Anforderung, mit dem Breitbandzugangsnetz (120) verbunden zu werden, über den spezifischen Zugangsknoten (151) an die Service-Edge-Entität oder -Funktionalität (160) und/oder an die Richtlinien-Controller-Entität oder -Funktionalität (161)sendet, wobei dadurch der spezifische Zugangsknoten (151) auch eine Leitungskennungsinformation sendet, die sich auf die Verbindung oder den Port bezieht, die bzw. der durch das Teilnehmerendgerät (50) verwendet wird,
- das Teilnehmerendgerät (50) von der Service-Edge-Entität oder -Funktionalität (160) und/oder von der Richtlinien-Controller-Entität oder -Funktionalität (161) die Leitungskennungsinformation empfängt,
- das Teilnehmerendgerät (50) einen geschützten Datenübertragungstunnel (59) zu der Business-Support-System-Entität oder -Funktionalität (170) initiiert, wobei der Datenübertragungstunnel (59) für das Teilnehmerendgerät (50) spezifisch ist, und wobei die Leitungskennungsinformation sowie eine Identifiziererinformation, die sich auf das Teilnehmerendgerät (50) bezieht, unter Verwendung des Datenübertragungstunnels (59) zu der Business-Support-System-Entität oder -Funktionalität (170) übertragen werden.

10. Programm, umfassend einen computerlesbaren Programmcode, der, wenn er teilweise in einem Teilnehmerendgerät (50), teilweise in einer Service-Edge-Entität oder -Funktionalität (160) und/oder einer Richtlinien-Controller-Entität oder -Funktionalität (161) und teilweise in einer Business-Support-System-Entität oder -Funktionalität (170) ausgeführt wird, das Teilnehmerendgerät (50), die Service-Edge-Entität oder -Funktionalität (160) und/oder die Richtlinien-Controller-Entität oder -Funktionalität (161) und die Business-Support-System-Entität oder -Funktionalität (170) veranlasst, ein Verfahren nach einem der Ansprüche 1 bis 8 durchführen.

11. Computerlesbares Medium, umfassend Instruktionen, die, wenn sie teilweise in einem Teilnehmerendgerät (50), teilweise in einer Service-Edge-Entität oder -Funktionalität (160) und/oder einer Richtlinien-Controller-Entität oder -Funktionalität (161) und teilweise in einer Business-Support-System-Entität oder -Funktionalität (170) ausgeführt werden, das Teilnehmerendgerät (50), die Service-Edge-Entität oder -Funktionalität (160) und/oder die Richtlinien-Controller-Entität oder -Funktionalität (161) und die Business-Support-System-Entität oder -Funktionalität (170) veranlassen, ein Verfahren nach einem der Ansprüche 1 bis 8 durchführen.

## Revendications

1. Procédé permettant de faire fonctionner un équipement de locaux client (50) avec un réseau d'accès à large bande (120) d'un réseau de télécommunications (100), dans lequel le réseau d'accès à large bande (120) comprend au moins un nœud d'accès (151),
dans lequel un nœud d'accès spécifique (151) du réseau d'accès à large bande (120) est activé pour connecter de manière fonctionnelle l'équipement des locaux client (50) au réseau de télécommunications (100) en vue de fournir des services de communication et/ou des services d'accès de communications à un utilisateur lié ou connecté à l'équipement des locaux client (50),
dans lequel le réseau d'accès à large bande (120) comprend une entité ou fonctionnalité de périphérie de service (160) et une entité ou fonctionnalité de contrôleur de politique (161) ainsi qu'une entité ou fonctionnalité de système de prise en charge d'entreprise (170),
dans lequel, dans le cas où l'équipement des locaux client (50) est inconnu du réseau de télécommunications (100) ou n'a pas été connecté auparavant au réseau de télécommunications (100), le procédé comprend les étapes suivantes :
- dans une première étape, l'équipement des locaux client (50) transmet une demande de connexion au réseau d'accès à large bande (120), par l'intermédiaire du nœud d'accès spécifique (151), à l'entité ou fonctionnalité de périphérie de service (160) et/ou à l'entité ou fonctionnalité de contrôleur de politique (161), dans lequel le nœud d'accès spécifique (151) transmet ainsi également des informations d'identification de ligne liées à la connexion, ou au port, utilisés par l'équipement des locaux client (50),
- dans une deuxième étape, l'équipement des locaux client (50) reçoit, à partir de l'entité ou fonctionnalité de périphérie de service (160) et/ou de l'entité ou fonctionnalité de contrôleur de politique (161), les informations d'identification de ligne,
- dans une troisième étape, l'équipement des locaux client (50) initie un tunnel de transmission de données protégé (59) vers l'entité ou la fonctionnalité de système de prise en charge d'entreprise (170), dans lequel le tunnel de transmission de données (59) est spécifique à l'équipement des locaux client (50), et dans lequel les informations d'identification de ligne ainsi que des informations d'identification, relatives à l'équipement des locaux client (50), sont transmises, à l'aide du tunnel de transmission de données (59), à l'entité ou à la fonctionnalité de système de prise en charge d'entreprise (170).

2. Procédé selon la revendication 1, dans lequel l'entité ou fonctionnalité de système de prise en charge d'entreprise (170) comprend une passerelle de légitimation (171), dans lequel le tunnel de transmission de données protégé (59) est, dans une première sous-étape de la troisième étape, initié vers la passerelle de légitimation (171), dans lequel, dans une seconde sous-étape de la troisième étape, l'équipement des locaux client (50) transmet, à l'aide du tunnel de transmission de données protégé (59), des informations d'identité personnelles et/ou commerciales ainsi que l'identification de ligne à la passerelle de légitimation (171).

3. Procédé selon l'une des revendications précédentes, dans lequel l'équipement des locaux client (50) reçoit, préalablement à la seconde sous-étape de la troisième étape, les informations d'identité personnelles et/ou commerciales à l'aide d'une interface de transmission de données, notamment une interface de communication en champ proche et/ou une interface de communication à courte portée, telle qu'une interface Bluetooth et/ou une interface de communication de réseau local sans fil,
dans lequel, en particulier, les informations d'identité personnelles et/ou commerciales sont reçues à partir d'un dispositif de document d'identité et/ou d'un dispositif de carte à puce (50) et/ou d'un dispositif informatique mobile ou d'un téléphone intelligent.

4. Procédé selon l'une des revendications précédentes, dans lequel, lors des première et deuxième étapes, l'équipement des locaux client (50) d'une part, et l'entité ou fonctionnalité de périphérie de service (160) et/ou l'entité ou fonctionnalité de contrôleur de politique (161) d'autre part, communiquent à l'aide d'au moins l'un parmi :
- protocole Ethernet point à point, PPPoE, en utilisant notamment un message d'initiation de découverte active PPPoE, PADI, dans la première étape, et un message d'offre de découverte active PPPoE, PADO, dans la deuxième étape,
- protocole de configuration d'hôte dynamique, DHCP, en utilisant notamment un message de découverte DHCP dans la première étape, et un message d'offre DHCP dans la deuxième étape,
- protocole de configuration d'hôte dynamique, DHCPv6, en utilisant notamment un message de sollicitation de routeur, RS, DHCP, dans la première étape, et une annonce de routeur, RA, DHCP, dans la deuxième étape.

5. Procédé selon l'une des revendications précédentes, dans lequel, lors des première et deuxième étapes, l'équipement des locaux client (50) transmet les informations d'identification, relatives à l'équipement des locaux client (50),
dans lequel, en particulier, les informations d'identification relatives à l'équipement des locaux client (50) correspondent à une adresse matérielle de l'équipement des locaux client (50), telle qu'une adresse de commande d'accès au support, MAC.

6. Procédé selon l'une des revendications précédentes, dans lequel, après la deuxième étape et avant la troisième étape, l'équipement des locaux client (50) transmet une requête, notamment une requête DNS, concernant l'entité ou la fonctionnalité de système de prise en charge d'entreprise (170) et/ou la passerelle de légitimation (171), et l'équipement des locaux client (50) reçoit des informations concernant l'entité ou la fonctionnalité de système de prise en charge d'entreprise (170) et/ou la passerelle de légitimation (171).

7. Procédé selon l'une des revendications précédentes, dans lequel l'équipement des locaux client (50) est connecté au nœud d'accès spécifique (151) à l'aide de l'un ou plusieurs parmi
- un support partagé, notamment un mécanisme d'accès point à multipoint, tel qu'un réseau optique passif ou une partie de celui-ci ou un réseau câblé coaxial de spécifications d'interface du service de transmission de données par câble, DOCSIS, dans lequel, dans le cas de l'utilisation du réseau optique passif ou d'une partie de celui-ci, l'équipement des locaux client (50) correspond notamment à un terminal de réseau optique ou à une unité de réseau optique, et le nœud d'accès spécifique (151) correspond notamment à un terminal de ligne optique,
- un support point à point, en utilisant notamment un accès de ligne d'abonné numérique, DSL, et en utilisant notamment des éléments de nœud d'accès multiservice, MSAN.

8. Procédé selon l'une des revendications précédentes, dans lequel, notamment lors de la deuxième étape, l'entité ou fonctionnalité de périphérie de service (160) et/ou l'entité ou fonctionnalité de contrôleur de politique (161) fournit une connexion de protocole Internet à l'équipement des locaux client (50) en vue de réaliser ou de fournir à l'équipement des locaux client (50) une fonctionnalité de jardin clos, notamment une connectivité à une entité ou une fonctionnalité de système de noms de domaine (165).

9. Système comprenant un équipement des locaux client (50) et un réseau d'accès à large bande (120) permettant de faire fonctionner l'équipement des locaux client (50) avec le réseau d'accès à large bande (120), dans lequel le réseau d'accès à large bande (120) comprend au moins un nœud d'accès (151),
dans lequel un nœud d'accès spécifique (151) du réseau d'accès à large bande (120) est activé pour connecter de manière fonctionnelle l'équipement des locaux client (50) à un réseau de télécommunications (100) en vue de fournir des services de communication et/ou des services d'accès de communications à un utilisateur lié ou connecté à l'équipement des locaux client (50),
dans lequel le réseau d'accès à large bande (120) comprend une entité ou fonctionnalité de périphérie de service (160) et une entité ou fonctionnalité de contrôleur de politique (161) ainsi qu'une entité ou fonctionnalité de système de prise en charge d'entreprise (170),
dans lequel, dans le cas où l'équipement des locaux client (50) est inconnu du réseau de télécommunications (100) ou n'a pas été connecté auparavant au réseau de télécommunications (100), le système est configuré de telle sorte que :
- l'équipement des locaux client (50) transmet une demande de connexion au réseau d'accès à large bande (120), par l'intermédiaire du nœud d'accès spécifique (151), à l'entité ou fonctionnalité de périphérie de service (160) et/ou à l'entité ou fonctionnalité de contrôleur de politique (161), dans lequel le nœud d'accès spécifique (151) transmet ainsi également des informations d'identification de ligne liées à la connexion, ou au port, utilisés par l'équipement des locaux client (50),
- l'équipement des locaux client (50) reçoit, à partir de l'entité ou fonctionnalité de périphérie de service (160) et/ou de l'entité ou fonctionnalité de contrôleur de politique (161), les informations d'identification de ligne,
- l'équipement des locaux client (50) initie un tunnel de transmission de données protégé (59) vers l'entité ou la fonctionnalité de système de prise en charge d'entreprise (170), dans lequel le tunnel de transmission de données (59) est spécifique à l'équipement des locaux client (50), et dans lequel les informations d'identification de ligne ainsi que des informations d'identification, relatives à l'équipement des locaux client (50), sont transmises, à l'aide du tunnel de transmission de données (59), à l'entité ou à la fonctionnalité de système de prise en charge d'entreprise (170).

10. Programme comprenant un code de programme lisible par ordinateur qui, lorsqu'il est exécuté en partie sur un équipement des locaux client (50), en partie sur une entité ou fonctionnalité de périphérie de service (160) et/ou une entité ou fonctionnalité de contrôleur de politique (161), et en partie sur une entité ou fonctionnalité de système de prise en charge d'entreprise (170), amène l'équipement des locaux client (50), l'entité ou fonctionnalité de périphérie de service (160) et/ou l'entité ou fonctionnalité de contrôleur de politique (161), et l'entité ou fonctionnalité de système de prise en charge d'entreprise (170), à mettre en œuvre un procédé selon l'une des revendications 1 à 8.

11. Support lisible par ordinateur comprenant des instructions qui, lorsqu'elles sont exécutées en partie sur un équipement des locaux client (50), en partie sur une entité ou fonctionnalité de périphérie de service (160) et/ou une entité ou fonctionnalité de contrôleur de politique (161), et en partie sur une entité ou fonctionnalité de système de prise en charge d'entreprise (170), amènent l'équipement des locaux client (50), l'entité ou fonctionnalité de périphérie de service (160) et/ou l'entité ou fonctionnalité de contrôleur de politique (161), et l'entité ou fonctionnalité de système de prise en charge d'entreprise (170), à mettre en œuvre un procédé selon l'une des revendications 1 à 8.
